# EUROPÄISCHE PATENTSCHRIFT

(11) **EP 2 126 318 B1**
(45) Veröffentlichungstag und Bekanntmachung des Hinweises auf die Patenterteilung: **27.10.2010**
(21) Anmeldenummer: 07858182.4
(22) Anmeldetag: 27.12.2007
(51) Int. Cl.: F02D 41/02, F02D 41/40

(54) **VERFAHREN ZUM BEHEIZEN EINES IN EINEM ABGASBEREICH EINES VERBRENNUNGSPROZESSES ANGEORDNETEN KATALYSATORS UND VORRICHTUNG ZUR DURCHFÜHRUNG DES VERFAHRENS**
METHOD FOR HEATING A CATALYTIC CONVERTER ARRANGED IN AN EXHAUST-GAS REGION OF A COMBUSTION PROCESS, AND DEVICE FOR CARRYING OUT THE METHOD
PROCÉDÉ DE CHAUFFAGE D'UN CATALYSEUR DISPOSÉ DANS LA ZONE OCCUPÉE PAR LES GAZ D'ÉCHAPPEMENT D'UN PROCESSUS DE COMBUSTION ET DISPOSITIF EN VUE DE LA MISE EN UVRE DU PROCÉDÉ

(30) Priorität: 28.12.2006 DE 102006061687; 28.12.2006 DE 102006061694
(43) Veröffentlichungstag der Anmeldung: 02.12.2009
(73) Patentinhaber: Robert Bosch GmbH, 70442 Stuttgart (DE)
(72) Erfinder: MUELLER, Norbert, Farmington Hills, Michigan 48331 (US); PORTEN, Guido, 71665 Vaihingen/Enz (DE); RAIMANN, Juergen, 71263 Weil Der Stadt (DE); WINKLER, Klaus, 71277 Rutesheim (DE)
(86) Internationale Anmeldenummer: PCT/EP2007/064586
(87) Internationale Veröffentlichungsnummer: WO 2008/080952

(56) Entgegenhaltungen:
- WO-A-02/18763
- WO-A-02/18764
- WO-A-2005/100767
- JP-A- 2000 054 837
- US-A- 5 845 492
- US-B1- 6 330 796

## Beschreibung

### Stand der Technik

Die Erfindung betrifft ein Verfahren zum Beheizen eines in einem Abgasbereich eines Verbrennungsprozesses, insbesondere einer Brennkraftmaschine angeordneten Katalysators und eine Vorrichtung zur Durchführung des Verfahrens nach der Gattung der unabhängigen Ansprüche.

Die Brennkraftmaschine wird mit Kraftstoff-Direkteinspritzung betrieben, wobei zum Beheizen des Katalysators eine Zündwinkel-Spätverstellung sowie eine Aufteilung der Kraftstoff-Einspritzung in wenigstens zwei Kraftstoff-Teileinspritzungen vorgesehen ist, die vor der Zündung liegen. Eine durch diese Maßnahme auftretende Drehmomenteinbuße wird durch eine erhöhte Zylinderfüllung kompensiert Bei einem kalten Katalysator, der noch nicht konvertieren kann, ist zum Erreichen einer geringen Abgas-Rohemission der Brennkraftmaschine gegebenenfalls vorgesehen, die Luftzahl Lambda >1 festzulegen, das heißt, die Brennkraftmaschine mit einem im mageren Kraftstoff-Luft-Gemisch zu betreiben.

Ein solches Verfahren und ein solches Steuergerät werden bereits in Serie verwendet.

Aus der Druckschrift WO 02/18763 A1 ist ein Verfahren zur Aufheizung eines Katalysators bekannt, bei dem zunächst die Abgasenthalpie erhöht wird und dann wenn eine vorbestimmte Katalysatortemperatur erreicht ist, zusätzlicher Kraftstoff eingespritzt wird. Der zusätzlich eingespritzte Kraftstoff soll im Katalysator reagieren und wird dazu erst dann in den Brennraum eingespritzt, wenn die Brennraumfüllung bereits verbrannt worden ist. Der auf diese Weise nach der Verbrennung eingespritzte Kraftstoff steht daher weitestgehend für exotherme Reaktionen im Katalysator zur Verfügung, was eine besonders effiziente Aufheizung bewirken soll.

Es wird die Strategie verfolgt, bei einem kalten Katalysator, beispielsweise nach einem Startvorgang der Brennkraftmaschine, eine möglichst große Wärmemenge im Abgas zu erzeugen, ohne die Leistung der Brennkraftmaschine oder die in der Nachstartphase gegebenenfalls angehobene Leerlaufdrehzahl von etwa 1.200/min zu verändern.

Dies wird bei dem angewandten Verfahren dadurch erreicht, dass ein erster Teil der Kraftstoffmenge im Ansaugtakt und ein zweiter Teil der Kraftstoffmenge im Verdichtungstakt eingespritzt werden. Als Folge ergibt sich eine geschichtete Kraftstoffverteilung im Brennraum mit einer aus der Einspritzung des zweiten Teils resultierenden Zone mit vergleichsweise fettem und daher gut zündfähigem Kraftstoff-Luft-Gemisch in der Nähe der Zündkerze. Dieser Betrieb der Brennkraftmaschine kann als Homogen-Split-Betrieb bezeichnet werden, wobei sich "split" auf die Aufteilung der Einspritzung bezieht.

Die Ladungsschichtung ermöglicht einen sehr späten Zündzeitpunkt im Bereich von 10 bis 30° Kurbelwellenwinkel nach OT (OT = oberer Totpunkt) bei stabilem Drehzahlverhalten und beherrschbaren Abgas-Rohemissionen. Der späte Zündzeitpunkt führt zu einem vergleichsweise schlechteren Zündwinkel-Wirkungsgrad, unter dem hier das Verhältnis der erzeugten Drehmomente bei dem späten Zündzeitpunkt und einem optimalen Zündzeitpunkt verstanden wird. Die aus dem schlechten Zündwinkel-Wirkungsgrad resultierende Drehmomenteinbuße wird durch eine Vergrößerung der Brennraumfüllungen der Brennkraftmaschine kompensiert. Bei den realisierten Zündwinkeln ergeben sich Vergrößerungen der Brennraumfüllungen bis zu Werten, die etwa 75 % der unter Normbedingungen möglichen maximalen Füllung betragen. In der Summe ergibt sich damit eine vergleichsweise große Abgasmenge, deren Temperatur wegen des schlechten Zündwinkel-Wirkungsgrades vergleichsweise hoch ist, sodass ein maximaler Wärmestrom (Enthalpiestrom) im Abgasbereich auftritt.

Bei einer Aufheizung mit dieser Maximierung der Abgasenthalpie muss der Abgasbereich vom Auslassventil an bis zum Katalysator komplett erwärmt werden. Die Wärmekapazität dieser Bauteile führt insbesondere bei Brennkraftmaschinen mit Abgasturboladern zu hohen Wärmeverlusten vor dem Katalysator, die eine effektive Aufheizung des Katalysators erschweren. Bei Brennkraftmaschinen mit Abgasturboladern ist zusätzlich problematisch, dass der im Strömungsweg der Abgase vor der Turbine des Turboladers liegende Abgaskrümmer bei der Maximierung der Abgasenthalpie sehr schnell auf Temperaturen aufgeheizt wird, bei denen eine weitere Aufheizung zu seiner Zerstörung führen kann. Dies beschränkt die zur Katalysatoraufheizung gewünschte Maximierung der Abgasenthalpie.

Der zuvor beschriebene Homogen-Split-Betrieb der Brennkraftmaschine kann in einer Nachstartphase mit einem konstanten Timing der Kraftstoff-Einspritzzeitpunkte und Zündzeitpunkte eingesetzt werden. Bei herkömmlichen Brennkraftmaschinen-Steuerungen beginnt die Nachstartphase nach einer Starterbetätigung dann, wenn die Drehzahl der Brennkraftmaschine einen zwischen der Starterdrehzahl und der Leerlaufdrehzahl der Brennkraftmaschine liegenden Drehzahl-Schwellenwert überschreitet und dauert dann über einen vorbestimmten Zeitraum von üblicherweise 20 bis 30 Sekunden an. Innerhalb dieses Zeitraums erreicht ein nahe an der Brennkraftmaschine angeordneter Vorkatalysator normalerweise eine Betriebstemperatur (Light-off temperature), bei der die Schadstoffkonvertierung, insbesondere die Konvertierung von Kohlenwasserstoffen spürbar einsetzt. Nach einer üblichen Definition entspricht die Light-off Temperatur derjenigen Temperatur, bei der 50 % der vor dem Katalysator auftretenden unerwünschten Abgasbestandteile wie Kohlenmonoxid (CO) und Kohlenwasserstoffe (HC) in unschädliche Abgasbestandteile wie Wasser und Kohlendioxid konvertiert werden.

In der Realität steigt der Prozentsatz der Schadstoffkonvertierung nicht schlagartig an, sondern steigt vielmehr allmählich an. Nach dem Beginn der Schadstoffkonvertierung im Vorkatalysator sinkt die hinter dem Vorkatalysator messbare Konzentration an Kohlenwasserstoffen schnell auf Werte nahe bei null ab. Wie sich bei Versuchen gezeigt hat, korreliert das Absinken der Kohlenwasserstoff-Konzentration hinter dem Vorkatalysator mit dem Erreichen der Light-off temperature in einem zentralen Bereich des Vorkatalysators. Die Menge der nach einem Kaltstart der Brennkraftmaschine oder beispielsweise nach einer Schubabschaltung (Betreiben der Brennkraftmaschine ohne Kraftstoffzumessung) in die Umgebung emittierten Kohlenwasserstoffe ist daher stark von der Zeitspanne abhängig, die zum Erreichen der Betriebstemperatur des Katalysators notwendig ist.

### Offenbarung der Erfindung

Vor diesem Hintergrund besteht die Aufgabe der Erfindung in der Angabe eines Verfahrens und einer Vorrichtung zur Durchführung des Verfahrens, die eine rasche Aufheizung eines Katalysators ermöglichen.

Erfindungsgemäß ist vorgesehen, dass ein Maß für die Temperatur des Katalysators ermittelt und die Menge reduzierender Abgasbestandteile durch einen Eingriff in die Steuerung der Brennkraftmaschine dann erhöht wird, wenn die Katalysatortemperatur einen vorbestimmten Schwellenwert überschreitet.

Dadurch, dass die Brennkraftmaschine bei einem kalten Katalysator, der noch nicht konvertieren kann, mit einem mageren Kraftstoff-Luft-Gemisch betrieben wird, tritt eine geringst mögliche Abgas-Rohemission von beispielsweise unverbrannten Kohlenwasserstoffen auf, die in die Umwelt gelangt. Während dieses Betriebszustands der Brennkraftmaschine wird die Beheizung des Katalysators durch eine Verschlechterung des Wirkungsgrads der Brennkraftmaschine erzielt.

Erst wenn der vorbestimmte Temperatur-Schwellenwert der Katalysatortemperatur erreicht ist, wird die Menge reduzierender Abgasbestandteile durch einen Eingriff in die Steuerung der Brennkraftmaschine erhöht. Der Eingriff erfolgt durch eine Rücknahme der Zündwinkel-Spätverschiebung. Es hat sich gezeigt, dass dies einen Anstieg der HC-Roh-Emissionen um ca. 3% bewirken kann, wobei dies mit einer Absenkung der Abgastemperatur verbunden sein kann. Dies kann jedoch aus Bauteil-Schutz-Gründen von Vorteil sein.

Es hat sich gezeigt, dass sich die Zeit bis zum Erreichen der Light-off Temperatur und damit die Menge der in die Umgebung emittierten Kohlenwasserstoffe durch diese Maßnahmen verringern lässt. Dieser vorteilhafte Effekt dürfte darauf beruhen, dass erste katalytisch beschichtete Flächenelemente am Eingang des Katalysators dann, wenn die Temperatur am Eingang des Katalysators den vorbestimmten Schwellenwert überschreitet, bereits zu konvertieren beginnen, obwohl die Temperatur im zentralen Bereich des Katalysators noch wesentlich niedriger ist und noch weit unterhalb der Betriebstemperaturschwelle des Katalysators liegt.

Durch das erhöhte Angebot reduzierender Abgasbestandteile in Verbindung mit im Abgas vorhandenem Sauerstoff, stellen sich an diesen Flächenelementen exotherme Reaktionen ein, die zu einer direkten, unmittelbaren und damit beschleunigten Aufheizung des Katalysators beitragen. Mit der dann erfolgenden Erhöhung der Menge reduzierender Abgasbestandteile, die beispielsweise kontinuierlich vorgenommen wird, erfolgt eine kontinuierliche Zunahme der im Katalysator freigesetzten Wärme. Die dadurch beschleunigte Aufheizung der ersten Zentimeter des Katalysators ist wesentlich effektiver als die Aufheizung durch einen konstanten Enthalpiestrom aus der intermotorischen Verbrennung, wie er beim Stand der Technik (und bei der Erfindung vor der Ü-berschreitung des Temperatur-Schwellenwertes) genutzt wird. Dies liegt unter anderem daran, dass der Enthalpiestrom, bevor er in den Katalysator eintritt, Verluste durch die Erwärmung anderer Bauteile erfährt. Beispiele solcher anderer Bauteile sind Abgaskrümmer, Turbolader etc.

Als wesentlicher weiterer Vorteil der erfindungsgemäßen Vorgehensweise ergibt sich neben der Verringerung von Emissionen unverbrannter reduzierender Abgasbestandteile auch eine Verringerung der Stickoxid-Emissionen.

Vorteilhafte Weiterbildungen und Ausgestaltungen der erfindungsgemäßen Vorgehensweise ergeben sich aus abhängigen Ansprüchen.

Alternativ oder zusätzlich ist gemäß einer Ausgestaltung vorgesehen, die Menge reduzierender Abgasbestandteile durch eine Änderung der Aufteilung der in den Kraftstoff-Teileinspritzungen vor der Zündung vorgegebene Kraftstoffmengen zu erzielen.

Weiterhin alternativ oder zusätzlich ist gemäß einer Ausgestaltung vorgesehen, die Menge reduzierender Abgasbestandteile durch eine Absenkung der Luftzahl Lambda auf einen gegenüber dem Ausgangspunkt geringeren Luftüberschuss zu erzielen.

Darüber hinaus kann weiterhin alternativ oder zusätzlich wenigstens eine Kraftstoff-Nacheinspritzung nach dem Beginn der Verbrennung vorgesehen sein.

Insbesondere im Rahmen der Ausgestaltung mit wenigstens einer Kraftstoff-Nacheinspritzung ergibt sich der folgende Vorteil. Durch die Maximierung der Abgasenthalpie wird die Aufbereitung und Verdampfung der mit den weiteren Einspritzungen dosierten Kraftstoffmenge wesentlich verbessert, so dass die Wahrscheinlichkeit, dass Kraftstoff in Tröpfchenform in den Katalysator gelangt, verringert wird. Die durch späte Zündungen und erhöhte Brennraumfüllungen vergrößerte Abgasenthalpie wird zwar durch die Verdampfung der zusätzlich dosierten Kraftstoffmenge wieder verringert. Mit Blick auf die erwünschte Aufheizung des Katalysators wird diese Verringerung jedoch durch die effektivere Aufheizung des Katalysators durch die exothermen Reaktionen mehr als kompensiert. Bei Brennkraftmaschinen mit Abgasturboladern ergibt sich der zusätzliche Vorteil eines Schutzes des Krümmers vor einer Überhitzung, die bei der Maximierung der Abgasenthalpie ohne Dosierung zusätzlichen Kraftstoffs auftreten kann. Die zusätzliche, an eine Mindesttemperatur vor dem Katalysator geknüpfte zusätzliche Einspritzung entfaltet hier den doppelten Nutzen, dass die Temperatur vor dem Turbolader sinkt, was den Krümmer schützt, und trotzdem mehr Energie zum Aufheizen des Katalysators bereitgestellt wird als ohne die wenigstens eine Kraftstoff-Nacheinspritzung.

Die erfindungsgemäße Vorrichtung zur Durchführung des Verfahrens betrifft zunächst ein speziell hergerichtetes Steuergerät, das Mittel zur Durchführung des Verfahrens enthält.

Das Steuergerät enthält vorzugsweise wenigstens einen elektrischen Speicher, in welchem die Verfahrensschritte als Steuergerätprogramm abgelegt sind.

Das erfindungsgemäße Steuergerätprogramm sieht vor, dass alle Schritte des erfindungsgemäßen Verfahrens ausgeführt werden, wenn es in einem Steuergerät abläuft.

Das erfindungsgemäße Steuergerät-Programmprodukt mit einem auf einem maschinenlesbaren Träger gespeicherten Programmcode führt das erfindungsgemäße Verfahren aus, wenn das Programm in einem Steuergerät abläuft.

Weitere vorteilhafte Weiterbildungen und Ausgestaltungen der erfindungsgemäßen Vorgehensweise ergeben sich aus weiteren abhängigen Ansprüchen. Ausführungsbeispiele der Erfindung sind in der Zeichnung dargestellt und in der nachfolgenden Beschreibung näher erläutert.

### Kurzbeschreibung der Figuren

- Figur 1 zeigt: ein technisches Umfeld, in welchem ein erfindungsgemäßes Verfahren abläuft,
- Figur 2 zeigt: zeitlich korrelierte Verläufe von Drehzahlen, Temperaturen und Koh- lenwasserstoffkonzentrationen im Abgas, wie sie sich bei der bekann- ten Strategie und dem Gegenstand der Erfindung einstellen,
- Figur 3: verschiedene Kraftstoff-Einspritzmuster, und
- Figur 4: ein Flussdiagramm als Ausführungsbeispiel eines erfindungsgemäßen Verfahrens.

### Detaillierte Beschreibung der Ausführungsbeispiele

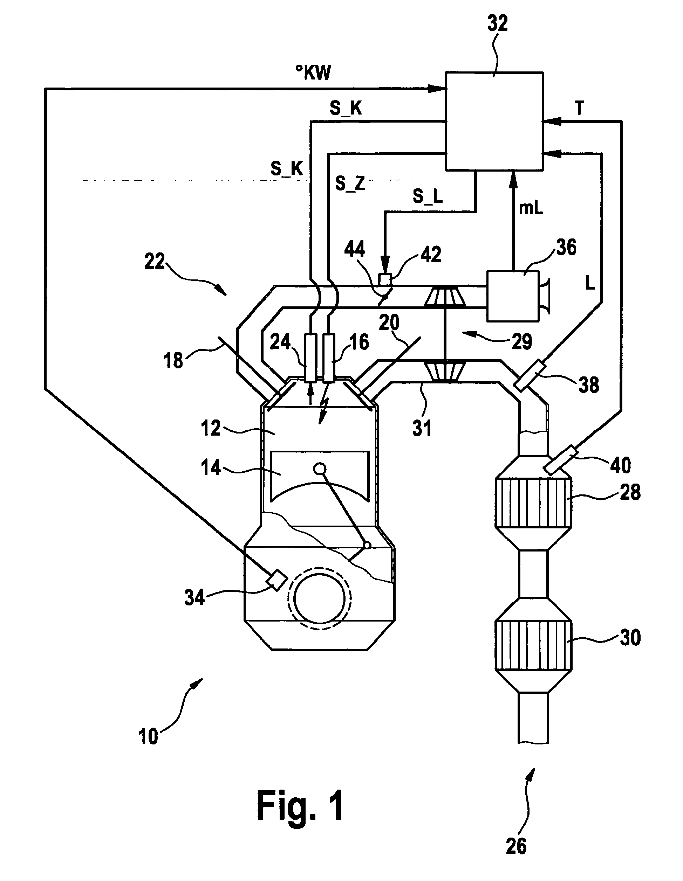

Im Einzelnen zeigt Figur 1 eine Brennkraftmaschine 10 mit wenigstens einem Brennraum 12, der von einem Kolben 14 beweglich abgedichtet wird. Füllungen des Brennraums 12 mit einem Gemisch aus Kraftstoff und Luft werden von einer Zündkerze 16 gezündet und anschließend verbrannt. In einer bevorzugten Ausgestaltung ist die Brennkraftmaschine 10 für ein strahlgeführtes Brennverfahren optimiert. Als Brennverfahren bezeichnet man die Art und Weise der Gemischbildung und Energieumsetzung im Brennraum. Das strahlgeführte Brennverfahren zeichnet sich dadurch aus, dass der Kraftstoff in unmittelbarer Umgebung der Zündkerze eingespritzt wird und dort verdampft. Das erfordert eine exakte Positionierung von Zündkerze 16 und Kraftstoff-Injektor sowie eine präzise Strahlausrichtung, um das Gemisch zum richtigen Zeitpunkt entzünden zu können. Ein Wechsel der Füllung des Brennraums 12 wird mit Gaswechselventilen 18 und 20 gesteuert, die phasensynchron zur Bewegung des Kolbens 14 geöffnet und geschlossen werden. Die verschiedenen Möglichkeiten zur Betätigung der Gaswechselventile 18 und 20 sind dem Fachmann vertraut und sind aus Gründen der Übersichtlichkeit in der Figur 1 nicht im Detail dargestellt. Bei geöffnetem Einlassventil 18 und abwärts laufendem Kolben 14, also im Ansaugtakt, strömt Luft aus einem Ansaugsystem 22 in den Brennraum 12. Über einen Injektor 24 wird Kraftstoff zu der Luft im Brennraum 12 dosiert. Aus einer Verbrennung der Brennraumfüllungen resultierendes Abgas wird bei geöffnetem Auslassventil 20 in ein Abgassystem 26 ausgestoßen, das wenigstens einen Katalysator 28 aufweist, der zumindest teilweise derart ausgestaltet ist, dass der Katalysator 28 eine Oxidations-Reaktion von Sauerstoff mit reduzierenden Bestandteilen des Abgases katalytisch unterstützt. Im Allgemeinen wird das Abgassystem 26 mehrere Katalysatoren enthalten, zum Beispiel einen motornah eingebauten Vorkatalysator, im gezeigten Ausführungsbeispiel der Katalysator 28, und einen motorferner angeordneten weitere Katalysator 30, der beispielsweise ein 3-Wege-Katalysator oder ein NOx-Speicherkatalysator sein kann.

In der Ausgestaltung der Figur 1 weist die Brennkraftmaschine 10 einen Turbolader 29 auf, der zwischen einem Krümmer 31 und dem Katalysator 28 im Strömungsweg der Abgase angeordnet ist. Wie bereits erwähnt wurde, ergeben sich bei einer solchen Brennkraftmaschine besondere Vorteile durch die Verbindung eines Schutzes des Krümmers mit der beschleunigten Aufheizung des Katalysators 28. Es versteht sich aber, dass die Erfindung nicht auf eine Verwendung bei Verbrennungsmotoren mit Turboladern beschränkt ist, da sich der Vorteil der beschleunigten Aufheizung des Katalysators 28 auch bei Brennkraftmaschinen 10 ohne Abgasturbolader 29 einstellt.

Die Brennkraftmaschine 10 beziehungsweise die Verbrennung in der Brennkraftmaschine 10 wird von einem Steuergerät 32 gesteuert, das dazu Signale verschiedener Sensoren verarbeitet, in denen sich Betriebsparameter der Brennkraftmaschine 10 abbilden. In der nicht abschließenden Darstellung der Figur 1 sind dies ein Drehwinkelsensor 34, der eine Winkelposition °KW einer Kurbelwelle der Brennkraftmaschine 10 und damit eine Stellung des Kolbens 14 erfasst, ein Luftmassenmesser 36, der eine in die Brennkraftmaschine 10 strömende Luftmasse mL erfasst, und, optional, ein oder mehrere Abgassensoren 38, 40, die eine Konzentration eines Abgasbestandteils und/oder eine Temperatur T des Abgases erfassen.

In der Ausgestaltung der Figur 1 ist der Abgassensor 38 ein Lambdasensor, der eine Sauerstoffkonzentration im Abgas als Maß einer Luftzahl L (L = Lambda) erfasst, während der Sensor 40 eine Abgastemperatur T erfasst. Im gezeigten Ausführungsbeispiel erfasst der Sensor 40 die Abgastemperatur T am Eingang des Katalysators 28. Die Luftzahl Lambda ist bekanntlich als Quotient einer tatsächlich zur Verfügung stehenden Luftmasse im Zähler und einer für eine stöchiometrische Verbrennung einer bestimmten Kraftstoffmasse erforderlichen Luftmasse im Nenner definiert. Luftzahlen Lambda größer eins repräsentieren daher einen Luftüberschuss, während Luftzahlen Lambda kleiner eins einen Kraftstoffüberschuss repräsentieren. Sofern das Abgassystem 26 einen Abgastemperatursensor 40 aufweist, kann dieser auch an anderer Stelle des Abgassystems 26 angeordnet sein, beispielsweise am Eingang des weiteren Katalysators 30. Dies gilt insbesondere für den Fall, dass der weitere Katalysator 30 ein NOx-Speicherkatalysator ist.

Wesentlich für die Erfindung ist, das ein Maß für die Temperatur T des Katalysators 28, 30, vorzugsweise ein Maß für die Temperatur am Eingang des Katalysators 28, 30 ermittelt wird. Die Ermittlung kann bei einer Ausgestaltung, wie sie in der Figur 1 dargestellt ist, durch Messung mit dem Temperatursensor 40 erfolgen. Bei dem in Figur 1 gezeigten Ausführungsbeispiel erfasst der Temperatursensor 40 als Maß für die Temperatur insbesondere am Eingang des Katalysators 28, 30 die Abgastemperatur. Alternativ oder ergänzend kann das Maß für die Temperatur T des Katalysators 28, 30 auch aus wenigstens einem Betriebsparameter der Brennkraftmaschine 10 durch ein Rechenmodell im Steuergerät 32 unter Verwendung von im Steuergerät 32 abgelegten Zusammenhängen ermittelt werden. Wenn der Temperatursensor 40 an anderer Stelle im Abgassystem 26 angeordnet ist, kann das Maß für die Temperatur T des Katalysators 28, 30, insbesondere am Eingang des Katalysators 28, 30 aus einem Rechenmodell ermittelt werden, das an die an anderer Stelle im Abgassystem 26 gemessene Temperatur adaptiert wird. Analog kann ein Rechenmodell auch dazu dienen, das Signal des Temperatursensors 40 zu korrigieren. Diese Ausgestaltung ist insbesondere bei schnellen Temperaturänderungen, insbesondere des Abgases, sinnvoll, die wegen einer Trägheit des Temperatursensors 40 besser durch ein Rechenmodell berücksichtigt werden können.

Aus den Signalen dieser und gegebenenfalls weiterer Sensoren bildet das Steuergerät 32 Stellsignale zur Ansteuerung von Stellgliedern zur Steuerung der Brennkraftmaschine 10. In der Ausgestaltung der Figur 1 sind dies insbesondere ein Stellsignal S_L zur Ansteuerung eines Drosselklappenstellers 42, der die Winkelstellung einer Drosselklappe 44 im Ansaugsystem 22 verstellt, ein Signal S_K, mit dem das Steuergerät 32 den Injektor 24 ansteuert und ein Stellsignal S_Z, mit dem das Steuergerät 32 die Zündkerze 16 beziehungsweise eine Zündvorrichtung 16 ansteuert.

Im Übrigen ist das Steuergerät 32 dazu eingerichtet, insbesondere dazu programmiert, das hier vorgestellte Verfahren und/oder eine seiner Ausgestaltungen durchzuführen und/oder einen entsprechenden Verfahrensablauf zu steuern, wobei das Programm in wenigstens einem, in Figur 1 nicht näher gezeigten Speicher hinterlegt ist.

In einer bevorzugten Ausgestaltung rechnet das Steuergerät 32 Leistungsanforderungen an die Brennkraftmaschine 10 in einen Sollwert für das von der Brennkraftmaschine 10 insgesamt zu erzeugende Drehmoment um und teilt dieses Drehmoment auf Drehmomentanteile auf, die durch die Stellsignale S_L für die Füllungssteuerung, S_K für die Kraftstoffzumessung und S_Z für die Zündungssteuerung beeinflusst werden. Der Füllungsanteil wird durch eine entsprechende Einstellung der Drosselklappe 42 mit dem Stellsignal S_L eingestellt. Der Kraftstoffanteil wird mit der Stellgröße S_K im Wesentlichen durch die eingespritzte Kraftstoffmasse und die Art und Weise der Aufteilung der einzuspritzenden Kraftstoffmasse auf eine oder mehrere Teileinspritzungen sowie die relative Lage der Teileinspritzungen zueinander und zu der Bewegung des Kolbens 14, also durch ein Einspritz-Timing, eingestellt. Das bei gegebener Luftfüllung maximal mögliche Drehmoment ergibt sich bei optimaler Luftzahl Lambda, optimalem Einspritz-Timing und optimalem Zündwinkel.

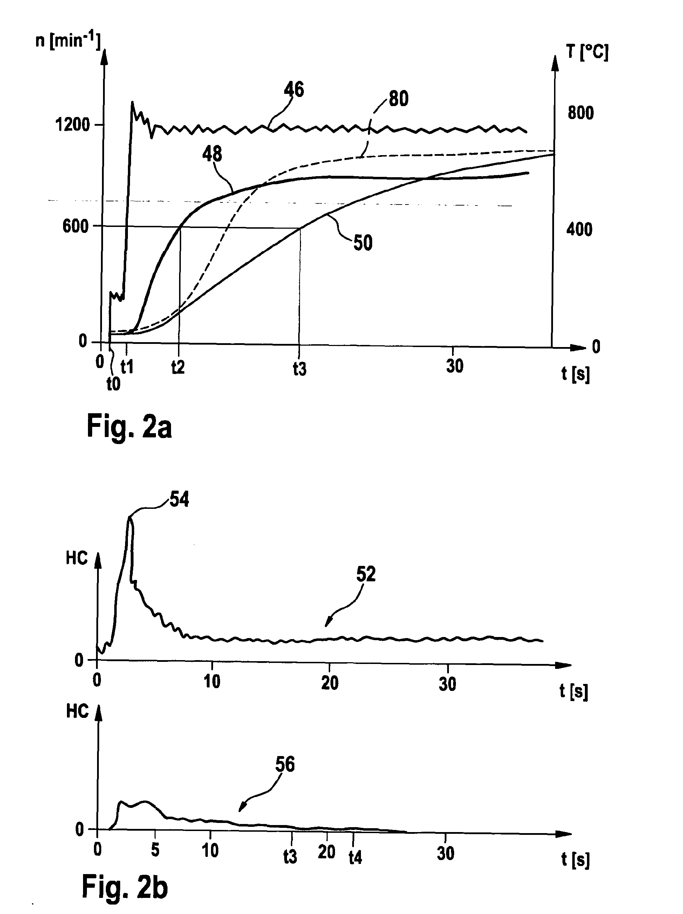

Vor dem weiter unten angegebenen Ausführungsbeispiel eines erfindungsgemäßen Verfahrens wird zunächst unter Bezug auf die Figur 2 die Situation bei dem bekannten Verfahren dargestellt. Im Einzelnen zeigt Figur 2a unter anderem zeitlich korrelierte Verläufe 46, 48 und 50 der Drehzahl n der Brennkraftmaschine 10 (Verlauf 46), der Temperatur T des Katalysators 28, 30, insbesondere der Temperatur T am Eingang des Katalysators 28, 30, speziell der Abgastemperatur T am Eingang des Katalysators 28, 30 (Verlauf 48) und der Temperatur in einem zentralen Bereich des Katalysators 28, 30 (Verlauf 50) nach beispielsweise einem Kaltstart der Brennkraftmaschine 10 in einer Nachstartphase oder beispielsweise nach einem Schubbetrieb der Brennkraftmaschine 10, in welchem die Kraftstoffzufuhr unterbrochen ist. Dabei sind die in der Figur 2a dargestellten zeitlichen Verläufe 48, 50 bei der Durchführung des bekannten Verfahrens, das auf einer Vergrößerung des Wärmestroms im Abgas basiert, aufgenommen worden.

Zum Zeitpunkt t0 beschleunigt ein Starter die Brennkraftmaschine 10 auf eine Starterdrehzahl von knapp über 200 U/min. Mit einsetzenden Verbrennungen in den Brennräumen 12 steigt die Drehzahl n der Brennkraftmaschine 10 weiter an und überschreitet zum Zeitpunkt t1 einen Startende-Drehzahl-Schwellenwert von ca. 400 U/min. Anschließend pendelt sie sich rasch auf eine erhöhte Leerlaufdrehzahl von ca. 1.200 U/min ein. Mit dem Überschreiten des Startende-Drehzahl-Schwellenwerts zum Zeitpunkt t1 beginnt die Nachstartphase. Um in dieser Nachstartphase einen großen Wärmestrom im Abgas bereitzustellen, gibt das Steuergerät 30 über die Stellgröße S_Z suboptimale Zündwinkel aus, die über den damit verringerten Zündwinkelwirkungsgrad zu einer Drehmomenteinbuße führen, die durch eine vergrößerte Füllung der Brennräume 12 durch Stellsignale S_L erzeugt wird, kompensiert wird. Durch ergänzende Beeinflussung der Kraftstoff-Stellsignale S_K wird insgesamt eine Luftzahl Lambda im überstöchiometrischen Bereich, also eine Luftzahl Lambda L größer 1, beispielsweise L = 1,1 eingestellt.

Dies ist besonders in einer Phase wichtig, in welcher der Katalysator 28, 30 keine oder nur in geringem Maße Kohlenwasserstoffe reduzieren kann, sodass die einzige Möglichkeit zur Beschränkung der in die Umgebung gelangenden Kohlenwasserstoff-Emissionen darin besteht, die Roh-Emissionen der Brennkraftmaschine 10 zu beschränken. Diese Beschränkung ergibt sich als erwünschte Folge des Betriebs mit einer Luftzahl Lambda L größer als eins.

Durch die vergrößerte Füllung wird eine hohe Abgasmenge erzeugt, die überdies wegen des suboptimalen Zündwinkel-Wirkungsgrades eine vergleichsweise hohe Temperatur besitzt und einen Sauerstoffüberschuss aufweist. Insgesamt wird damit ein großer Wärme- oder Enthalpiestrom erzeugt. Dadurch steigt die Temperatur T insbesondere im Eingangsbereich des Katalysators 28, 30 relativ schnell an, was sich im vergleichsweise steilen Anstieg des Verlaufs 48 abbildet. Im Ergebnis wird bereits zum Zeitpunkt t2 eine Abgastemperatur von beispielsweise 400° Celsius insbesondere am Eingang des Katalysators 28, 30 erreicht. Die Temperatur des zentralen Bereichs des Katalysators 28, 30, die sich im Verlauf 50 abbildet, erreicht den Temperaturwert von beispielsweise 400° Celsius dagegen erst zu einem späteren Zeitpunkt t3, was durch den wesentlichen flacheren Anstieg des Verlaufs 50 im Vergleich zum Verlauf 48 bedingt ist. Der flachere Verlauf 50 ergibt sich durch die Wärmekapazität der vor dem zentralen Bereich des Katalysators 28, 30 liegenden Bereiche, die bei der Durchströmung mit dem Abgas vor dem zentralen Bereich aufgeheizt werden und dem Abgas Wärme entziehen. Ein typischer Zeitabstand zwischen t2 und t3 liegt in der Größenordnung von 10 Sekunden.

Figur 2b zeigt zeitlich korrelierende Verläufe der Kohlenwasserstoffkonzentration vor und nach dem Vorkatalysator 28. Der Verlauf 52 der Kohlenwasserstoffkonzentration vor dem Vorkatalysator 28 weist anfangs ein scharfes Maximum 54 auf, das unmittelbar mit dem Starten der Brennkraftmaschine 10 und dem ersten Hochlaufen der Drehzahl n auf den Wert der angehobenen Leerlaufdrehzahl (beispielsweise 1.200 U/min) zusammenhängt. Anschließend fällt die Kohlenwasserstoffkonzentration vor dem Katalysator 28, 30 schnell auf einen vergleichsweise konstanten Wert ab.

In dem Verlauf 56 der Kohlenwasserstoffkonzentration nach dem Katalysator 28, 30 bildet sich das scharfe Maximum 54 des Verlaufs 52 in gestauchter und zeitlich gestreckter Form ab. Diese Stauchung und Streckung hängt weniger mit einer Konvertierung, als vielmehr mit einer gewissen Speicherwirkung des Katalysators 28, 30 zusammen. Anschließend nimmt die Kohlenwasserstoffkonzentration hinter dem Katalysator 28, 30 zunächst ähnliche Werte an, wie sie sich vor dem Katalysator 28, 30 einstellen, bevor sie allmählich mit einsetzender und allmählich zunehmender Konvertierungsfähigkeit des Katalysators 28, 30 auf einen Wert nahe bei null absinkt, was etwa zum Zeitpunkt t4 kurz nach dem Zeitpunkt t3 der Fall ist. Das heißt, dass die nahezu konstanten Kohlenwasserstoff-Rohemissionen der Brennkraftmaschine 10 ab dem Zeitpunkt t4 so gut wie vollständig durch den dann betriebsbereiten Katalysator 28, 30 konvertiert werden.

Die Menge der in die Umgebung emittierten Kohlenwasserstoffe ist zum Integral der Kohlenwasserstoffkonzentrationen nach dem Vorkatalysator 28 proportional. Da nach dem Zeitpunkt t4 kaum noch Kohlenwasserstoffemissionen hinter dem Katalysator 28, 30 auftreten, dominiert der Wert des Integrals zum Zeitpunkt t4 auch Ergebnisse von Abgastests. Um die Ergebnisse solcher Tests zu verbessern und damit die Emissionen von Kohlenwasserstoffen in die Umgebung zu verringern, sieht die Erfindung vor, bereits vor dem Zeitpunkt t3, zu dem insbesondere der zentrale Bereich des Katalysators 28, 30 seine Betriebstemperatur erreicht, die bereits am Eingang des Katalysators 28, 30 wegen der dort höheren Abgastemperaturen früher einsetzende Konvertierung zur schnelleren Aufheizung des Katalysators 28, 30 zu nutzen.

Gemäß einem Ausführungsbeispiel der erfindungsgemäßen Vorgehensweise ist wenigstens eine Kraftstoff-Nacheinspritzung nach dem Beginn der Verbrennung des Kraftstoffs in der Brennkraftmaschine 10 vorgesehen, wenn die Temperatur T insbesondere am Eingang des Katalysators 28, 30 einen vorbestimmten Schwellenwert T_S überschreitet. Im gezeigten Ausführungsbeispiel wird davon ausgegangen, dass dies zum Zeitpunkt t2 der Fall ist, wobei der Temperatur-Schwellenwert T_S beispielsweise bei 400°C liegt.

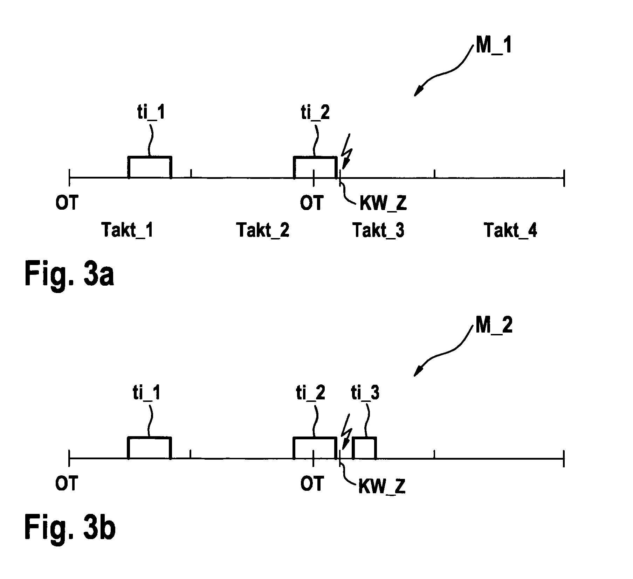

Fig. 3 zeigt verschiedene Einspritzmuster, wie sie bei Ausgestaltung des erfindungsgemäßen Verfahrens mit der wenigstens einen Kraftstoff-Nacheinspritzung auftreten. Dabei sind Einspritzimpulsbreiten ti_1, ti_2 und ti_3 jeweils als hohe Pegel über dem Kurbelwellenwinkel °KW eines Arbeitszyklus aus einem Ansaugtakt Takt_1, einem Verdichtungstakt Takt_2, einem Arbeitstakt Takt_3 und einem Auslasstakt Takt_4 aufgetragen. Obere Totpunkte sind mit OT bezeichnet.

Fig. 3a zeigt ein erstes Einspritzmuster M_1 für einen Homogen-Split-Betrieb für maximierte Abgasenthalpie mit einer ersten Teileinspritzung ti_1, die im Ansaugtakt Takt_1 erfolgt und einer zweiten Teileinspritzung ti_2, die später erfolgt. Die zweite Teileinspritzung ti_2 erfolgt vor der Zündung, die beim Kurbelwellenwinkel KW_Z ausgelöst wird. Wie bereits erwähnt wurde, liegt KW_Z unter Umständen sehr spät im Bereich von 10° bis 30° KW nach OT, sodass die zweite Teileinspritzung auch ganz oder teilweise im Arbeitstakt Takt_3 liegen kann. Sie liegt aber vor der Zündung. Statt einer Aufteilung auf zwei Teileinspritzungen kann die mit dem ersten Einspritzmuster M_1 eingespritzte Kraftstoffmenge auch auf mehr als zwei Teileinspritzungen aufgeteilt sein. Die Möglichkeit der Aufteilung wird durch die Kleinmengen-Dosierfähigkeit des Injektors 24 begrenzt. Wesentlich für das Muster M_1 ist die Aufteilung auf wenigstens zwei Teileinspritzungen, von denen die frühere bevorzugt im Ansaugtakt Takt_1 liegt und die letzte in demselben Arbeitszyklus vor der Zündung liegt, wobei sich in der Summe eine Luftzahl Lambda L größer als 1 ergibt.

Fig. 3b zeigt ein zweites Einspritzmuster M_2, das sich von dem ersten Einspritzmuster M_1 durch eine Kraftstoff-Nacheinspritzung ti_3 unterscheidet, die nach der Zündung erfolgt. Die mit der wenigstens einen Kraftstoff-Nacheinspritzung ti_3 eingespritzte Kraftstoffmenge wird daher zumindest nicht mehr vollständig im Brennraum 12 verbrannt und gelangt daher als unverbrannte Kraftstoffmenge in den maximierten Abgasenthalpiestrom. Ihre Verdampfungsenthalpie reduziert die Abgasenthalpie etwas, was beispielsweise den Krümmer 31 vor einer Überhitzung schützt. Die verdampfte Kraftstoffmenge wird mit dem Abgasstrom in den Katalysator 28, 30 transportiert und führt dort zu der dort erwünschten Wärmefreisetzung durch exotherme Reaktion mit Sauerstoff aus dem im Übrigen überstöchiometrisch zusammengesetzten Abgas. In einer bevorzugten Ausgestaltung wird die gesamte, mit dem Einspritzmuster M_2 eingespritzte Kraftstoffmenge so bemessen, dass sich vor dem Katalysator eine Luftzahl Lambda L ergibt, die um 1 bis 3 % geringer ist als die Luftzahl Lambda L bei dem Einspritzmuster M_1.

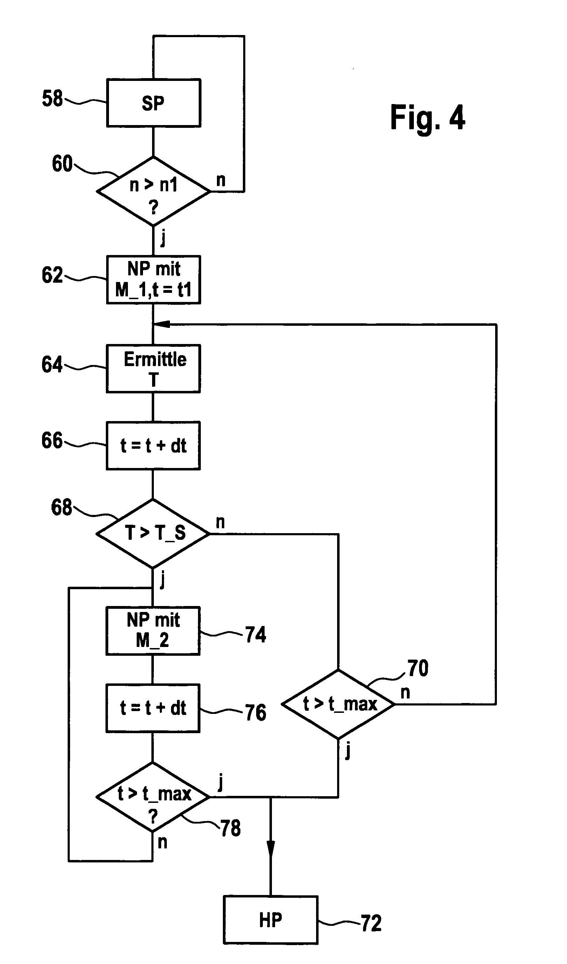

Figur 4 zeigt ein Flussdiagramm als Ausführungsbeispiel eines erfindungsgemäßen Verfahrens. In einem Schritt 58 wird bei einer Betätigung eines Starters ein Startprogramm SP ausgeführt, in dem Stellgrößen S_L, S_K und S_Z ausgegeben werden, mit denen die Brennkraftmaschine 10 bei aktiviertem Starter gestartet werden kann. In einem Schritt 60 wird überprüft, ob die Drehzahl n der Brennkraftmaschine 10 die Startende-Drehzahl n1 überschreitet. Solange das nicht der Fall ist, verzweigt das Programm zurück zum Schritt 58, in dem das Startprogramm SP weiter ausgeführt wird.

Sobald die Startende-Drehzahl n1 überschritten wird, verzweigt das Programm in einen Schritt 62, in dem der Ablauf eines Nachstartprogramms NP zur Steuerung der Brennkraftmaschine 10 im Leerlauf ausgelöst wird und in dem eine Zeitvariable t auf den Wert t1 gesetzt wird, bei dem der Startende-Drehzahlschwellenwert n1 überschritten worden ist. Der Betrieb mit dem Nachstartprogramm NP ist dabei insbesondere dadurch charakterisiert, dass zunächst ein großer Enthalpiestrom im Abgas in Verbindung mit möglichst geringen Roh-Emissionen von unverbrannten, reduzierenden Abgasbestandteilen wie HC und CO erzeugt wird. Der Enthalpiestrom wird bevorzugt durch einen Betrieb mit reduziertem Zündwinkel-Wirkungsgrad und einer Aufteilung einer pro Brennraumfüllung einzuspritzenden Kraftstoffmenge auf eine erste Einspritzung im Ansaugtakt und eine zweite Einspritzung im Verdichtungstakt in Verbindung mit einer vergrößerten Luftfüllung der Brennräume 12 vergrößert. Mit anderen Worten: Im Schritt 62 wird ein Ablauf des Nachstartprogramms mit einem Einspritzmuster M_1 ausgelöst, wie es im Zusammenhang mit der Fig. 3 beschrieben wurde.

Dabei liefert die Aufteilung der einzuspritzenden Kraftstoffmenge auf zwei Einspritzungen die Möglichkeit, den Zündwinkel-Wirkungsgrad vergleichsweise stark zu verringern, indem die Zündung bis in Bereiche von 10° bis 30° Kurbelwellenwinkel nach OT verschoben wird, was eine entsprechende Vergrößerung der Luftfüllung zur Kompensation der Drehmomenteinbuße ermöglicht. Um die Roh-Emissionen unverbrannter und reduzierender Abgasbestandteile möglichst gering zu halten, wird die Luftzahl Lambda L zu Beginn des Nachstartbetriebs NP auf Lambda-Werte größer als eins, zum Beispiel Lambda = 1,1, eingestellt. Dieser Betrieb stellt den bereits weiter oben erwähnten Homogen-Split-Betrieb dar.

Im weiteren Verlauf der Abarbeitung des Nachstartprogramms NP wird in einem Schritt 64 das Maß für die Temperatur T des Katalysators 28, 30, insbesondere das Maß für die Temperatur T am Eingang des Katalysators 28, 30 ermittelt. Wie bereits erwähnt wurde, kann die Ermittlung durch Messung und/oder Modellierung erfolgen.

Im Schritt 66 findet eine Erhöhung der Zeitvariablen t um ein Inkrement dt statt. Im Schritt 68 wird das im Schritt 64 ermittelte Maß für die Temperatur T mit dem Temperatur-Schwellenwert T_S verglichen. Solange das Maß für die Temperatur T kleiner als der Temperatur-Schwellenwert T_S ist, wird davon ausgegangen, dass auch die ersten katalytischen Flächenelemente am Eingang des Katalysators 28, 30 noch keine reduzierenden Abgasbestandteile konvertieren können. Die Abfrage im Schritt 68 wird entsprechend verneint und das Programm verzweigt dann zu einem Schritt 70, in dem überprüft wird, ob eine Maximaldauer t_max der Nachstartphase erreicht ist. Ein typischer Wert der Maximaldauer t_max liegt etwa zwischen 20 s und 30 s.

Wenn die Abfrage im Schritt 70 bejaht wird, verzweigt das Programm zu einem Schritt 72, in dem ein Hauptprogramm HP zur Steuerung der Brennkraftmaschine 10 durchgeführt wird. Das Hauptprogramm HP unterscheidet sich vom Nachstartprogramm NP insbesondere dadurch, dass die Brennkraftmaschine 10 nicht mehr mit dem maximierten Enthalpiestrom im Abgas betrieben wird.

Zu Beginn der Nachstartphase wird die Abfrage im Schritt 70 jedoch verneint werden und das Programm verzweigt zurück vor die Schritte 64 und 66, in denen das Maß für die Temperatur T erneut ermittelt wird und die Zeitvariable t um ein weiteres Inkrement dt erhöht wird. Auf diese Weise wird die Schleife aus den Schritten 64 bis 70 wiederholt durchlaufen, bis entweder die Abbruchbedingung im Schritt 68 oder die Abbruchbedingung im Schritt 70 erfüllt ist. Das bedeutet insbesondere, dass die Brennkraftmaschine 10 nach einem normalen Kaltstart im Nachstartprogramm NP so lange mit einem großen Enthalpiestrom und gleichzeitig möglichst geringen Kohlenwasserstoff-Emissionen betrieben wird, bis die Abfrage im Schritt 68 bejaht wird. Als Maß für die Temperatur T kann auch die seit dem Startende verstrichene Zeit verwendet werden. In einer weiteren Ausgestaltung kann als Maß für die Temperatur diese Zeit nach einer Gewichtung mit einer Temperatur der Brennkraftmaschine 10 kurz vor, während oder kurz nach dem Start verwendet werden. Je geringer diese Temperatur ist, desto kleiner ist der Gewichtungsfaktor zu wählen.

Gemäß einer anderen Ausgestaltung ist das erfindungsgemäße Verfahren unabhängig von einem Startvorgang der Brennkraftmaschine 10 durchführbar. Außer bei einem Kaltstart der Brennkraftmaschine 10 kann auch bei einem Betrieb der Brennkraftmaschine 10 im Rahmen einer Schubabschaltung, bei welcher die Kraftstoffzufuhr unterbrochen ist, ein Auskühlen des Katalysators 28, 30 auftreten, so dass ein erneutes Beheizen des Katalysators 28, 30 erforderlich ist. In diesem Fall entfällt das im Zusammenhang mit dem Startvorgang beschriebene Verfahren und das erfindungsgemäße Verfahren ist hauptsächlich temperaturgesteuert, wobei eine Überprüfung des Maßes für die Temperatur T daraufhin vorgesehen ist, ob der Temperatur-Schwellenwert T_S unter- oder überschritten ist. Neben der Temperatur Steuerung können weitere Kenngrößen wie beispielsweise eine Kennung für die Schubabschaltung berücksichtigt werden.

Die Abfrage im Schritt 68 wird bejaht, wenn das Maß für die Temperatur T den Temperatur-Schwellenwert T_S überschreitet. In einer bevorzugten Ausgestaltung ist der Schwellenwert T_S so vorbestimmt, dass er einer Temperatur entspricht, bei der die ersten Flächenelemente des Katalysators 28, 30 in spürbarem Umfang mit der Konvertierung reduzierender Abgasbestandteile durch katalytisches Auslösen exothermer Reaktionen mit dem Sauerstoffangebot im Abgas beginnen. Um die durch diese exothermen Reaktionen frei werdende Reaktionswärme zur beschleunigten Aufheizung des Katalysators 28, 30 verstärkt auszunutzen, wird in einem Schritt 74 ein Betrieb der Brennkraftmaschine 10 aktiviert, in welchem die wenigstens eine weitere Kraftstoff-Nacheinspritzung nach dem Beginn der Verbrennung erfolgt. Das Nachstartprogramm NP erfolgt daher mit einem Einspritzmuster M_2, wie es in Verbindung mit der Fig. 3 erläutert wurde.

Zusätzlich oder alternativ zu der wenigstens einen Kraftstoff-Nacheinspritzung können andere Maßnahmen zur Erhöhung der Menge reduzierender Abgasbestandteile durch einen Eingriff in die Steuerung der Brennkraftmaschine 10 vorgenommen werden.

Zusätzlich oder alternativ ist beispielsweise vorgesehen, die Zündwinkel-Spätverschiebung zu vermindern, also den Zündwinkel-Wirkungsgrad geringfügig zu erhöhen.

Zusätzlich oder alternativ ist beispielsweise vorgesehen, die Verteilung der in den einzelnen Kraftstoff-Teileinspritzungen zuzumessenden Kraftstoffmengen zu variieren.

Weiterhin zusätzlich oder alternativ ist beispielsweise vorgesehen, die Luftzahl Lambda L etwas weniger mager einzustellen.

Welche dieser Maßnahmen einzelnen oder in Verbindung mit anderen Maßnahmen die größte Wirkung entfaltet, von der Ausgestaltung der Brennkraftmaschine 10 ab. Die einzelnen Maßnahmen oder das Bündel von Maßnahmen sind daher durch Versuche zu identifizieren und entsprechend zu programmieren.

Als besonders geeignete Maßnahme wird eine kontinuierliche Verringerung der Luftzahl Lambda L während der Durchführung des Verfahrens nach dem Bejahen des Schrittes 68 um 1 bis 3%, beispielsweise von Lambda L = 1,1 auf Lambda L = 1,08 angesehen.

Eine Reduzierung der Zündwinkel-Spätverschiebung bewirkt ebenfalls einen Anstieg der HC-Roh-Emissionen. Bei Versuchen an einer Brennkraftmaschine 10 hat sich beispielsweise gezeigt, dass eine Verminderung der Zündwinkel-Spätverschiebung zu einem Anstieg der HC-Roh-Emissionen um circa 3% führen kann. Hierbei muss gegebenenfalls eine Absenkung der Abgastemperatur in Kauf genommen werden.

Die Luftzahl Lambda kann dadurch vergrößert werden, dass die gesamte, mit den beiden Kraftstoff-Teileinspritzungen eingespritzte Kraftstoffmenge vergrößert wird. Alternativ kann die Aufteilung der in den einzelnen Kraftstoff-Teileinspritzungen zuzumessenden Kraftstoffmenge geändert werden.

An den Schritt 74 schließt sich ein Schritt 76 an, in dem die Zeitvariable t um das Inkrement dt erhöht wird. Im Schritt 78 wird analog zur Abfrage im Schritt 70 überprüft, ob die Zeitvariable t nach einigen Erhöhungen um das Inkrement dt den Schwellenwert t_max überschreitet. Solange das nicht der Fall ist, wird die Abfrage im Schritt 78 verneint und das Programm kehrt zum Schritt 74 zurück, in dem der Betrieb mit dem zweiten Einspritzmuster M_2 fortgesetzt wird. In einer Ausgestaltung wird die mit der weiteren Teileinspritzung ti_3 eingespritzte Kraftstoffmenge dabei sukzessive erhöht und damit an die mit zunehmender Aufheizung in die Tiefe des Katalysators 28, 30 fortschreitende Fähigkeit zur Konvertierung angepasst. In einer Ausgestaltung wird die durch wenigstens eine Kraftstoff-Nacheinspritzung ti_3 erfolgte Erhöhung der Emission unverbrannter Abgasbestandteile beendet, wenn der Zeitschwellenwert t_max im Schritt 78 überschritten wird. In diesem Fall wird die Nachstartphase oder allgemein das erfindungsgemäße Verfahren beendet und das Programm verzweigt in den Schritt 72, in dem das bereits erläuterte Hauptprogramm zur Steuerung der Brennkraftmaschine 10 ohne vergrößerten Enthalpiestrom im Abgas durchgeführt wird.

Der gestrichelte Verlauf 80 in der Figur 2a bildet die Wirkung der Erfindung qualitativ ab. Der gestrichelte Verlauf 80 zeigt, wie auch der Verlauf 50, den zeitlichen Verlauf der Temperatur T in einem zentralen Bereich des Katalysators 28, 30 in der Nachstartphase beziehungsweise im normalen Katalysator-Heizbetrieb. Wie man sieht, verlaufen die Kurven 50 und 80 bis zum Zeitpunkt t2 parallel beziehungsweise identisch. Dies liegt daran, dass bis zum Zeitpunkt t2 kein Unterschied zu dem bekannten Verfahren besteht. Das heißt insbesondere, dass auch bei der Erfindung zu Beginn der Nachstartphase beziehungsweise zu Beginn der Katalysator-Heizmaßnahme die Brennkraftmaschine 10 mit einem vergrößerten Enthalpiestrom bei gleichzeitig möglichst weitgehend reduzierten Roh-Emissionen unverbrannter Abgasbestandteile betrieben wird. Ein Unterschied zwischen dem Verlauf 50, der sich bei dem bekannten Verfahren ergibt, und dem Verlauf 80, der sich gemäß der Erfindung ergibt, entsteht ab dem Zeitpunkt t2, zu dem die Temperatur T den Temperatur-Schwellenwert T_S erreicht. In einer Ausgestaltung liegt dieser Temperatur-Schwellenwert T_S beispielsweise zwischen 380° Celsius und 420° Celsius. Der Wert hängt in erheblichem Maße vom Katalysator 28, 30 ab. Für Zeiten t > t2 bewirkt die im Rahmen der Erfindung erhöhte RohEmission unverbrannter Kohlenwasserstoffe in Verbindung mit der einsetzenden Konvertierungsfähigkeit zumindest am Eingang des Katalysators 28, 30 eine exotherme Reaktion mit dem Sauerstoffangebot im Abgas, die den Katalysator 28, 30 effektiver aufheizt als dies allein mit dem vergrößerten Enthalpiestrom möglich ist. Als Folge steigt der gestrichelte Verlauf 80, der sich bei dem erfindungsgemäßen Verfahren ergibt, schneller an als der Verlauf 50, der sich bei dem bekannten Verfahren ergibt.

Wie man sieht, besteht eine relativ große Differenz zwischen dem Verlauf 48 der Temperatur vor dem Katalysator 28, 30 und dem mit dem bekannten Verfahren erzielten Verlauf 50 der Temperatur im zentralen Bereich des Katalysators 28, 30. Wie bereits erwähnt wurde, ist diese Differenz, beziehungsweise der zeitliche Abstand zwischen einem Zeitpunkt, zu dem das Maß für die Temperatur T des Katalysators 28, 30, insbesondere am Eingang des Katalysators 28, 30, den bestimmten Temperatur-Schwellenwert T_S erreicht, und dem Zeitpunkt, zu dem die Temperatur im zentralen Bereich des Katalysators 28, 30 diese Temperatur erreicht, für den größten Teil der bei kaltem Katalysator 28, 30 in die Umgebung gelangen den Kohlenwasserstoff-Emissionen verantwortlich. Ein Vergleich der mit dem erfindungsgemäßen Verfahren erzielten gestrichelten Kurve 80 mit der Kurve 48, die den Verlauf der Temperatur T insbesondere am Eingang des Katalysators 28, 30 widerspiegelt, zeigt, dass diese Differenz bei dem erfindungsgemäßen Verfahren wesentlich geringer ausfällt als bei dem bekannten Verfahren. Dies wirkt sich direkt verringernd auf die Kohlenwasserstoff-Emissionen in die Umgebung bei noch kaltem Katalysator 29, 30 aus.

## Patentansprüche

1. Verfahren zum Aufheizen eines im Abgasbereich (26) einer Brennkraftmaschine (10) angeordneten Katalysators (28, 30), wobei die Brennkraftmaschine mit Kraftstoff-Direkteinspritzung in die Brennräume (12) arbeitet, wobei die Brennkraftmaschine (10) mit suboptimalem Zündwinkel-Wirkungsgrad und einer Aufteilung einer vor einem Beginn einer Verbrennung einzuspritzenden Kraftstoffmenge auf wenigstens zwei Teileinspitzungen (ti_1, ti_2) betrieben wird, und wobei eine Drehmomenteinbuße, die aus dem suboptimalen Zündwinkel-Wirkungsgrad und/oder der Aufteilung der einzuspritzenden Kraftstoffmenge resultiert, durch eine erhöhte Füllung der Brennräume (12) kompensiert wird, und wobei Kraftstoffmenge und Füllung so aufeinander abgestimmt sind, dass die Luftzahl Lambda (L) der Brennraumfüllungen größer als 1 ist wobei dass ein Maß für die Temperatur (T) des Katalysators (28, 30) ermittelt wird und eine Menge reduzierender Abgasbestandteile durch wenigstens einen Eingriff in die Steuerung der Brennkraftmaschine (10) erhöht wird, wenn das Maß für die Temperatur (T) einen vorbestimmten Temperatur-Schwellenwert (T_S) überschreitet, wobei zur Erhöhung der Menge reduzierender Abgasbestandteile eine Rücknahme des Zündwinkel-Wirkungsgrades auf einen weniger ungünstigen Zündwinkel-Wirkungsgrad vorgenommen wird.

2. Verfahren nach Anspruch 1, **dadurch gekennzeichnet, dass** zur Erhöhung der Menge reduzierender Abgasbestandteile wenigstens eine Kraftstoff-Nacheinspritzung (ti_3) nach dem Beginn der Verbrennung vorgenommen wird.

3. Verfahren nach Anspruch 1, **dadurch gekennzeichnet, dass** zur Erhöhung der Menge reduzierender Abgasbestandteile die Aufteilung der in den einzelnen Kraftstoff-Teileinspritzungen (t_1, t_2) zuzumessenden Kraftstoffmenge geändert wird.

4. Verfahren nach Anspruch 1, **dadurch gekennzeichnet, dass** zur Erhöhung der Menge reduzierender Abgasbestandteile die Luftzahl Lambda (L) auf eine weniger magere Luftzahl Lambda (L) geändert wird.

5. Verfahren nach Anspruch 1, **dadurch gekennzeichnet, dass** das Maß für die Temperatur (T) am Eingang des Katalysators (28, 30) bestimmt wird.

6. Verfahren nach Anspruch 5, **dadurch gekennzeichnet, dass** eine Abgastemperatur stromaufwärts vor dem Katalysator (28, 30) als Maß für die Temperatur (T) am Eingang des Katalysators (28, 30) ermittelt wird.

7. Verfahren nach Anspruch 1, **dadurch gekennzeichnet, dass** das Maß für die Temperatur (T) mit einem Abgastemperaturmodell aus Betriebsparametern der Brennkraftmaschine (10) ermittelt wird.

8. Verfahren nach Anspruch 7, **dadurch gekennzeichnet, dass** das Maß für die Temperatur (T) alternativ oder ergänzend zu einer Ermittlung durch ein Abgastemperaturmodell aus einem Signal eines Temperatursensors (4) ermittelt wird.

9. Verfahren nach Anspruch 1, **dadurch gekennzeichnet, dass** als Maß für die Temperatur (T) eine seit einem Startende der Brennkraftmaschine (10) verstrichene Zeit verwendet wird.

10. Verfahren nach Anspruch 1, **dadurch gekennzeichnet, dass** es nur während einer Zeitspanne von weniger als 30 Sekunden nach einem Ende des Starts der Brennkraftmaschine (10) durchgeführt wird.

11. Verfahren nach Anspruch 1, **dadurch gekennzeichnet, dass** die Luftzahl Lambda im Abgas vor dem Katalysator (28) während der Durchführung des Verfahrens auf Werte größer als 1 eingestellt wird und dass die Erhöhung der Menge der reduzierenden Abgasbestandteile so bemessen ist, dass die Luftzahl Lambda (L) um 1 bis 3 % verringert wird.

12. Verfahren nach Anspruch 1, **dadurch gekennzeichnet, dass** die Menge reduzierender Abgasbestandteile kontinuierlich erhöht wird.

13. Verfahren nach Anspruch 1, **dadurch gekennzeichnet, dass** der Schwellenwert (T_S) so vorbestimmt ist, dass der Katalysator (28, 30) bei dieser Temperatur damit beginnt, Oxidationsreaktionen zwischen reduzierende und oxidierenden Abgasbestandteile katalytisch zu unterstützen.

14. Vorrichtung zur Durchführung des Verfahrens, **dadurch gekennzeichnet, dass** ein speziell hergerichtetes Steuergerät (32) vorgesehen ist, das Mittel zur Durchführung alle Schritte des Verfahrens nach einem der Ansprüche 1 bis 13 enthält.

15. Steuergerätprogramm welches alle Schritte des Verfahrens nach einem der Ansprüche 1 bis 13 ausführt, wenn es in einem Steuergerät (32) abläuft.

16. Steuergerät-Programmprodukt mit einem auf einem maschinenlesbaren Träger gespeicherten Programmcode, welches das Verfahren nach einem der Ansprüche 1 bis 13 ausführt, wenn das Programm in einem Steuergerät (32) abläuft.

## Claims

1. Method for heating a catalytic converter (28, 30) arranged in the exhaust-gas region (26) of an internal combustion engine (10), with the internal combustion engine operating with fuel direct injection into the combustion chambers (12), with the internal combustion engine (10) being operated with sub-optimum ignition angle efficiency and a division of a fuel quantity to be injected before the start of a combustion into at least two partial injections (ti_1, ti_2), and with a torque loss which results from the sub-optimum ignition angle efficiency and/or from the division of the fuel quantity to be injected being compensated by an increased charge of the combustion chambers (12), and with the fuel quantity and charge being coordinated with one another such that the air ratio lambda (L) of the combustion chamber charges is greater than 1, with a measure for the temperature (T) of the catalytic converter (28, 30) being determined, and with a quantity of reducing exhaust-gas constituents being increased by means of at least one intervention into the control of the internal combustion engine (10) if the measure for the temperature (T) exceeds a predetermined temperature threshold value (T_S), with the ignition angle efficiency being adjusted back to a less unfavourable ignition angle efficiency in order to increase the quantity of reducing exhaust-gas constituents.

2. Method according to Claim 1, **characterized in that,** to increase the quantity of reducing exhaust-gas constituents, at least one fuel post-injection (ti_3) is carried out after the start of combustion.

3. Method according to Claim 1, **characterized in that,** to increase the quantity of reducing exhaust-gas constituents, the division of the fuel quantity to be apportioned into the individual fuel partial injections (t_1, t_2) is changed.

4. Method according to Claim 1, **characterized in that,** to increase the quantity of reducing exhaust-gas constituents, the air ratio lambda (L) is changed to a less lean air ratio lambda (L).

5. Method according to Claim 1, **characterized in that** the measure for the temperature (T) at the inlet of the catalytic converter (28, 30) is determined.

6. Method according to Claim 5, **characterized in that** an exhaust-gas temperature upstream of the catalytic converter (28, 30) is determined as a measure for the temperature (T) at the inlet of the catalytic converter (28, 30).

7. Method according to Claim 1, **characterized in that** the measure for the temperature (T) is determined by means of an exhaust-gas temperature model from operating parameters of the internal combustion engine (10).

8. Method according to Claim 7, **characterized in that** the measure for the temperature (T) is determined, alternatively or in addition to a determination by means of an exhaust-gas temperature model, from a signal of a temperature sensor (4).

9. Method according to Claim 1, **characterized in that** a time which has elapsed since the end of a starting process of the internal combustion engine (10) is used as a measure for the temperature (T).

10. Method according to Claim 1, **characterized in that** said method is carried out only during a time period of less than 30 seconds after the end of the starting process of the internal combustion engine (10).

11. Method according to Claim 1, **characterized in that,** during the execution of the method, the air ratio lambda in the exhaust gas upstream of the catalytic converter (28) is set to values greater than 1, and **in that** the increase in the quantity of the reducing exhaust-gas constituents is dimensioned such that the air ratio lambda (L) is reduced by 1 to 3%.

12. Method according to Claim 1, **characterized in that** the quantity of reducing exhaust-gas constituents is increased continuously.

13. Method according to Claim 1, **characterized in that** the threshold value (T_S) is predetermined such that, at said temperature, the catalytic converter (28, 30) begins to catalytically assist oxidation reactions between reducing and oxidizing exhaust-gas constituents.

14. Device for carrying out the method, **characterized in that** a specifically set-up control unit (32) is provided which comprises means for carrying out all the steps of the method according to one of Claims 1 to 13.

15. Control unit programme which performs all the steps of the method according to one of Claims 1 to 13 when it is executed in a control unit (32).

16. Control unit programme product having a programme code stored on a machine-readable carrier, which control unit programme product carries out the method according to one of Claims 1 to 13 when the programme is executed in a control unit (32).

## Revendications

1. Procédé pour le chauffage d'un catalyseur (28, 30) disposé dans la zone des gaz d'échappement (26) d'un moteur à combustion interne (10), le moteur à combustion interne fonctionnant par injection directe de carburant dans les chambres de combustion (12), le moteur à combustion interne (10) fonctionnant avec un rendement d'angle d'allumage sous-optimal et une division d'une quantité de carburant à injecter avant le début d'une combustion en au moins deux injections partielles (ti_1, ti_2), et une perte de couple, qui résulte du rendement de l'angle d'allumage sous-optimal et/ou de la division de la quantité de carburant à injecter, étant compensée par un remplissage accru des chambres de combustion (12), et la quantité de carburant et le remplissage étant adaptés l'un à l'autre de telle sorte que le coefficient d'air lambda (L) des remplissages des chambres de combustion soit supérieur à 1, une mesure de la température (T) du catalyseur (28, 30) étant détectée et une quantité des constituants réducteurs des gaz d'échappement étant augmentée par au moins une intervention sur la commande du moteur à combustion interne (10) quand la mesure de la température (T) dépasse une valeur de température seuil prédéterminée (T_S), et pour augmenter la quantité des constituants réducteurs des gaz d'échappement, un retour du rendement de l'angle d'allumage à un rendement d'angle d'allumage moins défavorable étant effectué.

2. Procédé selon la revendication 1, **caractérisé en ce que** pour augmenter la quantité des constituants réducteurs des gaz d'échappement, on effectue au moins une post-injection de carburant (ti_3) après le début de la combustion.

3. Procédé selon la revendication 1, **caractérisé en ce que** pour augmenter la quantité des constituants réducteurs des gaz d'échappement, la division de la quantité de carburant à mesurer dans les injections partielles de carburant individuelles (t_1, t_2) est modifiée.

4. Procédé selon la revendication 1, **caractérisé en ce que** pour augmenter la quantité des constituants réducteurs des gaz d'échappement, le coefficient d'air lambda (L) est modifié à un coefficient d'air lambda (L) moins pauvre.

5. Procédé selon la revendication 1, **caractérisé en ce que** la mesure de la température (T) est déterminée à l'entrée du catalyseur (28, 30).

6. Procédé selon la revendication 5, **caractérisé en ce qu'**une température des gaz d'échappement en amont avant le catalyseur (28, 30) est déterminée en tant que mesure de la température (T) à l'entrée du catalyseur (28, 30).

7. Procédé selon la revendication 1, **caractérisé en ce que** la mesure de la température (T) est déterminée avec un modèle de température de gaz d'échappement provenant de paramètres de fonctionnement du moteur à combustion interne (10).

8. Procédé selon la revendication 7, **caractérisé en ce que** la mesure de la température (T) est déterminée, en variante ou en complément d'une détermination par un modèle de température de gaz d'échappement à partir d'un signal d'un capteur de température (4).

9. Procédé selon la revendication 1, **caractérisé en ce que** l'on utilise comme mesure de la température (T) un temps écoulé depuis la fin d'un démarrage du moteur à combustion interne (10).

10. Procédé selon la revendication 1, **caractérisé en ce qu'**il n'est mis en oeuvre que pendant un intervalle de temps inférieur à 30 secondes après la fin d'un démarrage du moteur à combustion interne (10).

11. Procédé selon la revendication 1, **caractérisé en ce que** le coefficient d'air lambda dans les gaz d'échappement avant le catalyseur (28) pendant la mise en oeuvre du procédé est ajusté à des valeurs supérieures à 1 et **en ce que** l'augmentation de la quantité des constituants réducteurs des gaz d'échappement est dimensionnée de telle sorte que le coefficient d'air lambda (L) soit réduit de 1 à 3 %.

12. Procédé selon la revendication 1, **caractérisé en ce que** la quantité des constituants réducteurs des gaz d'échappement est augmentée en continu.

13. Procédé selon la revendication 1, **caractérisé en ce que** la valeur seuil (T_S) est prédéterminée de telle sorte que le catalyseur (28, 30) commence à cette température à supporter par voie catalytique des réactions d'oxydation entre les constituants réducteurs et oxydants des gaz d'échappement.

14. Dispositif pour mettre en oeuvre le procédé, **caractérisé en ce que** l'on prévoit un appareil de commande (32) fabriqué spécialement, qui contient des moyens pour mettre en oeuvre toutes les étapes du procédé selon l'une quelconque des revendications 1 à 13.

15. Programme d'appareil de commande qui exécute toutes les étapes du procédé selon l'une quelconque des revendications 1 à 13, quand il est exécuté dans un appareil de commande (32).

16. Produit de programme d'appareil de commande avec un code programme mémorisé sur un support lisible en machine, qui met en oeuvre le procédé selon l'une quelconque des revendications 1 à 13 quand le programme est exécuté dans un appareil de commande (32).
